# DEMANDE DE BREVET EUROPEEN

(11) **EP 2 650 172 A1**
(43) Date de publication de la demande: **16.10.2013**
(21) Numéro de dépôt: 13162561.8
(22) Date de dépôt: 05.04.2013
(51) Int. Cl.: B60Q 1/068

(54) **Dispositif d'éclairage pour véhicule automobile comprenant un guide protecteur pour outil de réglage**

(30) Priorité: 11.04.2012 FR 1201091
(71) Demandeur: Valeo Vision Belgique, 7822 Meslin l'Evêque (BE)
(72) Inventeur: Herbin, Cyril, 59530 POTELLE (FR); Maliar, Rémi, 59880 SAINT SAULVE (FR)

(57) **Abrégé**

La présente invention concerne un dispositif (100) d'éclairage pour véhicule automobile comprenant un réflecteur (102), un support (104) dudit réflecteur (102) et une vis (106) permettant de régler la position dudit réflecteur (102) par rapport à son support (104), caractérisé en ce que le dispositif (100) comprend des moyens (114, 116) de guidage d'un outil (400, 402) de réglage destiné à coopérer avec ladite vis (106), ces moyens (114, 116) de guidage étant agencés de manière à limiter l'accès de l'outil (400, 402) de réglage à ladite vis (106) selon des directions prédéterminées.

## Description

L'invention est relative à un dispositif d'éclairage pour véhicule automobile comprenant un guide protecteur pour un outil de réglage dudit dispositif.

On connaît un dispositif d'éclairage pour véhicule automobile comprenant un réflecteur, un support dudit réflecteur et une vis permettant de régler la position du réflecteur par rapport à son support. A titre d'exemple, la demande de brevet EP 1 055 556 A1 déposée par la société Valeo Vision le 12 mai 2000 décrit un tel dispositif.

Lorsqu'un tel dispositif d'éclairage est utilisé pour générer des faisceaux d'éclairage tels que des faisceaux antibrouillards, il est connu d'intégrer ce dernier à l'intérieur d'un élément de la carrosserie tel qu'un bouclier avant.

Dans cette position, l'accès à la vis de réglage du dispositif d'éclairage peut être restreint et requérir une dépose de l'élément de carrosserie ou l'utilisation d'un outil allongé permettant d'accéder à ladite vis par une (ou plusieurs) ouverture(s) dédiée(s) dans la partie frontale de bouclier.

Pour des raisons esthétiques, une telle ouverture dédiée présente des dimensions relativement faibles et typiquement ajustées à l'outil de réglage dont la forme allongée permet d'accéder, au travers de l'élément de carrosserie, jusqu'à la vis de réglage.

Toutefois un opérateur introduisant son outil de réglage dans une telle ouverture étroite manque de visibilité sur la trajectoire de l'outil dans le bouclier de telle sorte que, pour amener l'outil en position de coopérer avec la vis de réglage, il procède par tâtonnements en déplaçant de façon relativement aléatoire l'extrémité du tournevis à proximité de la vis de réglage jusqu'à ce qu'il ressente que cette extrémité a buté contre cette vis de réglage.

La présente invention résulte de la constatation que ces tâtonnements répétés provoquent des détériorations du dispositif d'éclairage, notamment au voisinage de la vis de réglage. De fait, les tâtonnements de l'opérateur se traduisent par des coups et des accrocs du tournevis sur différents éléments du dispositif d'éclairage situés dans le bouclier.

Afin de résoudre ce problème, l'invention concerne un dispositif d'éclairage pour véhicule automobile comprenant un réflecteur, un support dudit réflecteur et une vis permettant de régler la position dudit réflecteur par rapport à son support, **caractérisé en ce que** le dispositif comprend des moyens de guidage d'un outil de réglage destiné à coopérer avec ladite vis, ces moyens de guidage étant agencés de manière à limiter l'accès de l'outil de réglage à ladite vis selon des directions prédéterminées.

Grâce à l'invention, le dispositif d'éclairage est protégé des coups et des accrocs dus aux tâtonnements d'un opérateur avec son outil de réglage puisque, lorsque l'outil de réglage est introduit selon des directions qui ne correspondent pas aux directions prédéterminées amenant l'outil pratiquement sur la vis de réglage, les moyens de guidage limitent les déplacements de l'outil de réglage et protègent le dispositif de ce dernier.

Parallèlement, ces moyens de guidage amènent alors l'outil de réglage vers une direction correcte pour atteindre la vis, ce qui permet d'accélérer le réglage du dispositif d'éclairage et, à nouveau, de réduire le risque d'endommager ce dernier lors du réglage.

Dans une réalisation, les moyens de guidage définissent une cavité traversante présentant une ouverture se prolongeant selon les directions prédéterminées accessibles à l'outil de réglage. Ainsi, les bords de la cavité servent de guide pour l'outil de réglage et protège le dispositif sur l'ensemble de l'espace entourant ladite cavité.

Selon une réalisation, la cavité définie par les moyens de guidage se rétrécit au fur et à mesure que la cavité se rapproche de la vis, par exemple de manière à ce que la cavité ait une forme d'entonnoir. De préférence, l'ouverture est la plus large vers l'avant du dispositif, permettant ainsi un guidage d'un outil de réglage venant depuis l'avant du dispositif et en direction de l'arrière. Les termes avant et arrière sont définis par rapport au sens d'émission de la lumière par le dispositif. Ainsi, la cavité guide l'outil de réglage vers la vis de réglage.

Dans une réalisation, la cavité définie par les moyens de guidage est fermée et délimitée par des surfaces s'étendant selon des plans discontinus ou présentant des ruptures d'angles, ce qui permet notamment une fabrication/adaptation selon différentes formes et/ou contraintes

Dans une réalisation, la vis de réglage présente une roue comprenant une série de dents permettant à l'outil de réglage de mettre en rotation cette vis autour de son axe longitudinal pour régler la position du réflecteur relativement à son support. Ainsi, il est simple de régler le réflecteur à l'aide d'une pointe située sur une extrémité de l'outil de réglage.

Selon une réalisation, les moyens de guidage sont solidaires du réflecteur et/ou du support, ce qui est notamment un avantage pour la fabrication/assemblage, en particulier lorsque les moyens de guidage forment une pièce unique avec le réflecteur ou son support.

Dans une réalisation, le dispositif comprend au moins deux moyens de guidage formant deux cavités limitant l'accès à la vis selon des directions distinctes propres à chaque cavité, ce qui permet d'accéder à la vis de réglage selon différents angles.

Selon une réalisation, le dispositif comprend des moyens d'alignement situés entre les moyens de guidage et la vis de manière à maintenir l'outil de réglage, en coopération avec les moyens de guidage, selon une direction prédéterminée amenant l'outil à la vis de réglage. Ainsi le guidage de l'outil de réglage est particulièrement efficace.

Selon un exemple de réalisation, le dispositif d'éclairage est un feu antibrouillard, notamment destiné à être fixé dans le bouclier avant d'un véhicule.

Selon un exemple de réalisation, le réflecteur est entièrement supporté par ledit support. Le réflecteur peut ainsi être fixé à la carrosserie du véhicule au moyen du support.

L'invention concerne également un support de réflecteur pour dispositif d'éclairage pour véhicule automobile, ce support étant apte à coopérer avec une vis dudit dispositif permettant de régler la position du réflecteur par rapport audit support, **caractérisé en ce qu'il** comprend des moyens de guidage d'un outil destiné à coopérer avec ladite vis, ces moyens de guidage étant agencés de manière à limiter l'accès de l'outil de réglage à ladite vis selon des directions prédéterminées dans un dispositif tel que défini ci-dessus.

D'autres avantages de l'invention apparaîtront à la lumière de la description d'une réalisation de l'invention effectuée ci-dessous, à titre illustratif et non limitatif, en référence aux figures ci-jointes sur lesquelles:
- La figure 1 est une vue éclatée d'un dispositif d'éclairage conforme à l'invention,
- la figure 2 est une vue en perspective du dispositif d'éclairage décrit à la figure 1,
- la figure 3 est une vue détaillée d'une partie du dispositif d'éclairage décrit à la figure 2,
- la figure 4 est une représentation schématique d'une mise en oeuvre du dispositif d'éclairage décrit à la figure 1, et
- la figure 5 est une vue en perspective d'une mise en oeuvre du dispositif d'éclairage décrit à la figure 1.

Dans les figures décrites ci-dessous, des éléments similaires ou effectuant des fonctions similaires sur différentes figures peuvent avoir des références identiques.

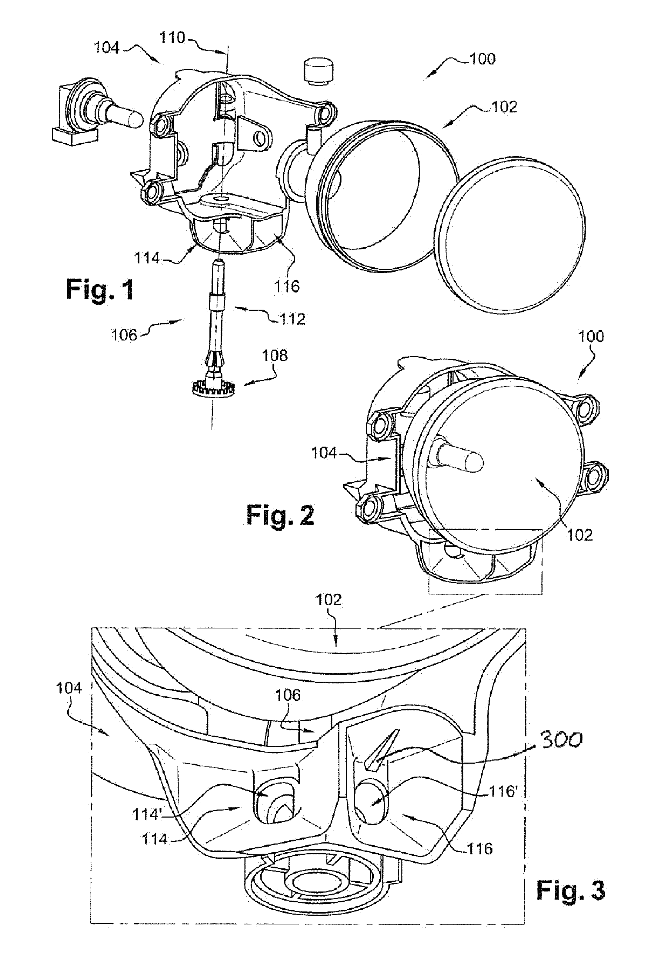

En référence à la figure 1 est décrit un dispositif 100 d'éclairage pour véhicule automobile selon une vue éclatée représentant notamment son réflecteur 102, le support 104 de ce réflecteur 102 et une vis 106 permettant de régler la position dudit réflecteur 102 par rapport à son support 104.

A cet effet cette vis 106 présente une première série 108 de dents pouvant coopérer avec un tournevis (non représenté) de façon à entraîner la vis 106 en pivotement autour de son axe longitudinal 110. Un tel mouvement de pivotement entraîne alors une deuxième série 112 de dents de la vis 106 qui coopèrent avec des dents complémentaires (non représentées) situées sur le réflecteur 102 de manière à modifier l'inclinaison de ce dernier relativement au support 104.

Ainsi l'inclinaison du faisceau optique issu du réflecteur 102 peut être réglée horizontalement lorsque le dispositif 100 est installé dans un véhicule, c'est-à-dire lorsque le support 100 est maintenu fixe dans la carrosserie. Un tel réglage permet d'utiliser un même dispositif à différents types de véhicules, ou à différentes charges portées par un même véhicule, en adaptant l'inclinaison du réflecteur au profil de chacun de ces différents types de véhicules ou aux différents profils d'un même véhicule portant différentes charges.

Selon un exemple de réalisation, et tel qu'illustré, il s'agit des dents d'une roue dentée étant à l'extrémité de la vis. La roue dentée est fixée dans ce mode de réalisation en son centre à la vis 106 et s'étend perpendiculairement à l'axe longitudinal de cette dernière. Ainsi la rotation de la roue dentée entraîne la rotation de la vis sur elle-même, autour de son axe longitudinal.

Dans un exemple de réalisation, la deuxième série de dents 112 est un filetage et les dents complémentaires du réflecteur 102 sont également un filetage, dont le pas de vis correspond à celui du filetage de la vis 106.

Le support 104 comprend des moyens 114 et 116 de guidage formant des cavités destinées à accueillir un tournevis destiné à coopérer avec la série 108 de dents de réglages. Ces cavités sont formées de manière à limiter l'accès du tournevis selon des directions prédéterminées qui correspondent aux directions selon lesquelles le tournevis est pratiquement amené au contact de cette série 108 de dents.

De façon corollaire les parois de ces moyens 114 et 116 bloquent le passage du tournevis lorsque ce dernier n'est pas correctement dirigé ou orienté vers la vis 106, ce qui réduit l'usure et les détériorations que le tournevis peut provoquer par une approche incorrecte vers la vis 106.

Par ailleurs ces cavités 114 et 116 ont des surfaces intérieures guidant l'outil vers la vis selon ces directions prédéterminées ce qui facilite l'opération de réglage et réduit ainsi le temps, et donc le coût, nécessaire à ce réglage.

A cet effet, les cavités formées par ces moyens 114 et 116 ont des formes d'entonnoir telles que ces cavités se rétrécissent à proximité de la vis 106 jusqu'à des ouvertures de sortie relativement ajustées aux dimensions d'un outil de réglage, ces ouvertures de sortie étant situées pratiquement en face de la vis de réglage comme décrit en détail ultérieurement.

Lorsque le dispositif 100 est agencé (figures 2 et 3), il apparaît que ces moyens de guidage 114 et 116 protègent le dispositif 100 sur un angle couvrant pratiquement l'ensemble de la partie frontale de la vis 106, ce qui assure une protection efficace du dispositif 100 au niveau de la vis 106 tout en présentant un encombrement réduit et limité dans une partie inférieure du dispositif. Cela permet également un accès par l'avant (Les termes avant et arrière sont définis par rapport au sens d'émission de la lumière par le dispositif) ce qui est particulièrement avantageux pour un dispositif 100 monté dans le bouclier avant du véhicule.

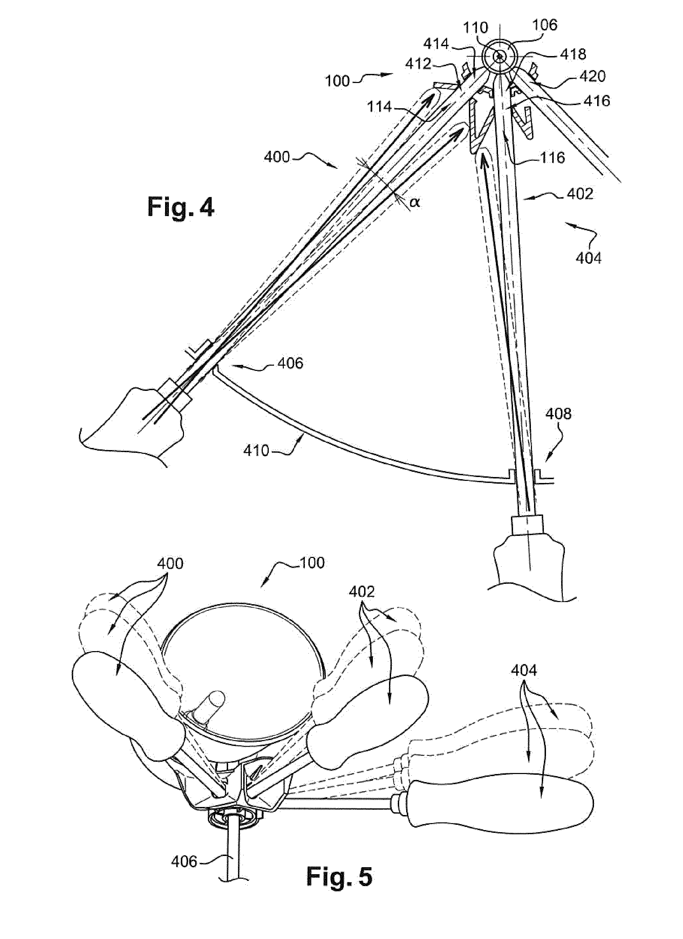

Il convient de noter que la figure 3 permet de visualiser que les moyens de guidage sont formées par des surfaces présentant des discontinuités/ruptures d'angles entre elles, ainsi que des moyens 114' et 116' d'alignement situés entre la vis 106 et les moyens 114 et 116 de guidage, la mise en oeuvre conjointe de ces moyens 114 et 116 de guidage et 114' et 116' d'alignement étant illustrée à la figure 4.

Sur cette figure 4 sont représentés en coupe différents tournevis 400, 402 et 404 selon une ou plusieurs position(s) aboutissant à leur contact avec les dents 108 de la roue dentée de la vis 106 de réglage.

Selon une première mise en oeuvre, les tournevis 400 et 402 sont insérés à travers des ouvertures 406 ou 408 d'un bouclier 410 qui loge le dispositif 100. Lorsque le tournevis 400 est introduit par l'ouverture 406, un opérateur peut tâtonner en balayant avec l'extrémité du tournevis un angle a relativement important sans que cette extrémité ne vienne endommager le dispositif d'éclairage car cette extrémité du tournevis 400 bute alors avec des surfaces internes de la cavité formée par les moyens 114.

En outre cette cavité tend, par l'inclinaison de ces surfaces internes, à guider le tournevis 400 vers une ouverture de sortie 412 située en vis-à-vis d'une ouverture 414 des moyens 114' d'alignement.

De façon analogue, lorsque le tournevis 402 est introduit dans l'ouverture 408, l'opérateur peut tâtonner en balayant avec l'extrémité du tournevis 402 un angle relativement important sans que cette extrémité ne vienne endommager une quelconque partie du dispositif car l'extrémité du tournevis bute avec la surface interne de la cavité formée par les moyens 116 de guidage, cette cavité tendant également à guider l'extrémité du tournevis 402 vers une ouverture 416 de sortie située en vis-à-vis d'une ouverture 418 des moyens 116' d'alignement.

Il apparaît alors que, lorsque le tournevis 400 (respectivement 402) est maintenu dans les deux ouvertures 412 et 414 (respectivement 416 et 418), il est maintenu selon une direction qui l'amène au contact avec la vis 106.

Finalement, il convient de noter que les moyens d'alignement présentent une troisième ouverture 420 pouvant être notamment utilisée lorsque le dispositif 100 est accessible sans passer par le bouclier avant 410 de la carrosserie et/ou lorsqu'il est possible d'accéder au dispositif par le démontage d'une pièce -typiquement une grille- située en partie basse et centrale du pare-chocs. Dans ce cas, le bouclier 410 est typiquement désolidarisé de la carrosserie et l'opérateur du tournevis 404 a une visibilité relativement satisfaisante lui permettant d'amener son tournevis 404 au contact des dents 106 sans risquer d'endommager le dispositif d'éclairage.

En référence à la figure 5 sont représentées différentes positions des tournevis 400, 402 et 404 présentant des variations verticales des directions prises par ces tournevis dans les moyens 114 et 116 de guidage. Dans ce cas, l'utilisation des moyens 114' et 116' d'alignement permet de fixer l'inclinaison requise pour la coopération des tournevis avec les dents 108.

En outre, il convient de noter que cette réalisation illustre un réglage possible du dispositif d'éclairage par une action sur la vis 106 obtenue à l'aide d'un tournevis 406 venant au contact de cette vis 106 par le dessous du dispositif 100.

La présente invention est susceptible de nombreuses variantes. Notamment, les moyens de guidage 114 et 116 peuvent être fixés au support 104, comme décrit ci-dessous, ou être fixés au réflecteur 102. De plus ces moyens 114 et 116 de guidage peuvent former une pièce unique avec le support comme décrit ci-dessous, ou être rapportés sur ces derniers après des fabrications indépendantes. Toutefois la conception et la fabrication d'une pièce unique présente l'avantage de limiter le coût de fabrication et de montage du dispositif 100.

Dans une variante de réalisation de l'invention, le moyen de support 104 est en forme de manchon entourant partiellement le réflecteur. Ce manchon se prolonge et se termine à l'avant par deux moyens de guidage 114 et 116 en formes d'entonnoirs, dont l'ouverture la plus large est vers l'avant, par rapport à la direction d'émission de la lumière du dispositif, la cavité se rétrécissant en direction de la vis de réglage. Ces moyens de guidage 114 et 116 sont sur le volume extérieur du manchon, à savoir sous le réflecteur 102. Une telle variante de réalisation est par exemple, telle qu'illustrée sur les figures 1 à 5.

La forme des moyens 114 et 116 peut aussi varier de façon à effectuer la fonction de guidage et de protection. Ainsi les cavités formées par ces moyens peuvent être partiellement ouvertes et la ou les surfaces formant ces cavités peuvent être plus ou moins inclinées selon une ou plusieurs courbures.

Ces surfaces peuvent comprendre une ou des rainure(s) 300 (figure 3) permettant de renforcer la solidité et/ou d'améliorer la fonction de guidage des moyens de guidage 114 et 116.

## Revendications

1. Dispositif (100) d'éclairage pour véhicule automobile comprenant un réflecteur (102), un support (104) dudit réflecteur (102) et une vis (106) permettant de régler la position dudit réflecteur (102) par rapport à son support (104), **caractérisé en ce que** le dispositif (100) comprend des moyens (114, 116) de guidage d'un outil (400, 402) de réglage destiné à coopérer avec ladite vis (106), ces moyens (114, 116) de guidage étant agencés de manière à limiter l'accès de l'outil (400, 402) de réglage à ladite vis (106) selon des directions prédéterminées.

2. Dispositif (100) selon la revendication 1 **caractérisé en ce que** les moyens (114, 116) de guidage définissent une cavité traversante présentant une ouverture (412, 414) se prolongeant selon les directions prédéterminées.

3. Dispositif (100) selon la revendication 2 **caractérisé en ce que** la cavité définie par les moyens (114, 116) de guidage se rétrécit au fur et à mesure que la cavité se rapproche de la vis (106).

4. Dispositif (100) selon la revendication 3 **caractérisé en ce que** la cavité définie par les moyens (114, 116) de guidage a une forme d'entonnoir.

5. Dispositif selon la revendication 4 **caractérisé en ce que** l'ouverture est la plus large vers l'avant du dispositif, permettant ainsi un guidage d'un outil de réglage venant depuis l'avant du dispositif et en direction de l'arrière d'où est émise la lumière du dispositif.

6. Dispositif (100) selon l'une des revendications 2 à 5 **caractérisé en ce que** la cavité définie par les moyens (114, 116) de guidage est fermée et délimitée par des surfaces s'étendant selon des plans discontinus.

7. Dispositif (100) selon l'une des revendications précédentes caractérisé ce que la vis (106) de réglage présente une roue comprenant une série (108) de dents permettant à l'outil de réglage (400, 402) de mettre en pivotement cette vis (106) autour de son axe (110) longitudinal pour régler la position du réflecteur (102) relativement à son support (104).

8. Dispositif (100) selon l'une des revendications précédentes caractérisé ce que les moyens (114, 116) de guidage sont solidaires du réflecteur (102) et/ou du support (104).

9. Dispositif (100) selon l'une des revendications précédentes **caractérisé en ce que** les moyens (114, 116) de guidage forment une pièce unique avec le réflecteur (102) ou son support (104).

10. Dispositif (100) selon l'une des revendications précédentes **caractérisé en ce qu'il** comprend au moins deux moyens (114, 116) de guidage formant deux cavités limitant l'accès à la vis (106) selon des directions distinctes propres à chaque cavité.

11. Dispositif (100) selon l'une des revendications précédentes **caractérisé en ce qu'il** comprend des moyens (114', 116') d'alignement situés entre les moyens de guidage (114, 116) et la vis (106) de manière à maintenir l'outil de réglage (400, 402), en coopération avec les moyens (114, 116) de guidage, selon une direction prédéterminée permettant d'amener l'outil (400, 402) sur la vis (106) de réglage.

12. Dispositif (100) selon l'une des revendications précédentes, **caractérisé en ce que** ledit dispositif est un feu antibrouillard.

13. Dispositif (100) selon la revendication précédente, **caractérisé en ce qu'il** est destiné à être fixé dans le bouclier avant d'un véhicule.

14. Dispositif (100) selon l'une des revendications précédentes, **caractérisé en ce que** le réflecteur (102) est entièrement supporté par ledit support (104).

15. Support (104) de réflecteur (102) pour dispositif (100) d'éclairage de véhicule automobile, ce support (102) étant apte à coopérer avec une vis (106) dudit dispositif (100) permettant de régler la position du réflecteur (102) par rapport au support (104), **caractérisé en ce qu'il** comprend des moyens (114, 116) de guidage d'un outil (400, 402) de réglage destiné à coopérer avec ladite vis (106), ces moyens (114, 116) de guidage étant agencés de manière à limiter l'accès de l'outil (400, 402) de réglage à ladite vis selon des directions prédéterminées dans un dispositif (100) conforme à l'une des revendications précédentes.
